# EUROPEAN PATENT SPECIFICATION

(11) **EP 3 722 364 B1**
(45) Date of publication and mention of the grant of the patent: **24.01.2024**
(21) Application number: 19169031.2
(22) Date of filing: 12.04.2019
(51) Int. Cl.: C08L 23/12

(54) **HIGH FLOW AND HIGH STIFFNESS IMPACT COPOLYMER POLYPROPYLENE**
COPOLYMER-POLYPROPYLEN MIT HOHEM DURCHFLUSS UND HOHER STEIFIGKEIT UND SCHLAGFESTIGKEIT
COPOLYMÈRE DE POLYPROPYLÈNE RÉSISTANT AUX CHOCS À FLUX ÉLEVÉ ET HAUTE RIGIDITÉ

(43) Date of publication of application: 14.10.2020
(73) Proprietor: Thai Polyethylene Co., Ltd., 10800 Bangkok (TH)
(72) Inventor: CHIVATANASOONTORN, Vadee, 10800 Bangkok (TH); CHEEVASRIRUNGRUANG, Watcharee, 10800 Bangkok (TH); PHIRIYAWIRUT, Phairat, 10800 Bangkok (TH); LERTTHANONGSAK, Somsak, 10800 Bangkok (TH)
(74) Representative: Marks & Clerk LLP

(56) References cited:
- EP-A1- 1 081 189
- EP-A1- 3 015 503
- EP-A2- 3 212 713
- WO-A1-2014/161621
- US-A1- 2005 075 439

## Description

### FIELD OF THE INVENTION

The present invention relates to an impact copolymer polypropylene composition for preparation of automotive parts by injection molding, a process for preparing the composition and to use of the composition in injection molding, e.g. thin-wall injection molding. The invention also relates to a method of injection molding, e.g. thin-wall injection molding, wherein the composition is injected, and to articles comprising the impact copolymer polypropylene composition.

### BACKGROUND OF THE INVENTION

Thin-wall injection molding is a key technology for making automotive parts, such as bumpers, dashboards and trim. Thin-wall injection molding requires high melt flow polymer to achieve the necessary processability. Automotive parts also require polymers that provide an appropriate balance of strength, stiffness and impact resistance. Impact copolymer polypropylene (ICP) is a well known polymer that can meet these requirements and is often used in the automotive sector.

In the automotive sector, the thin-wall injection molded parts, and in particular interior parts, such as dashboards, instrumental panels and door trim, are becoming more lightweight (thinner, larger, longer) and more complex in shape and design. At the same time, there is an increasing desire to provide interior parts having a high surface quality finish (i.e. a high surface level appearance) This includes a desire for molded automotive parts with a low surface gloss level and no flow mark or "Tiger mark" defects. It is known, however, that injection molded parts with a larger surface area (e.g. due to their length and/or width) are more inclined to display surface defects on the finished surface. These are called "Flow marks" or "Tiger marks" or "Tiger stripes." These are believed to be due to an unstable flow front during the filling phase of the injection molding process.

To meet the overall requirements of the automotive industry, an impact copolymer polypropylene composition needs to provide lightweight molded products with sufficient strength, stiffness and impact resistance to meet the mechanical specification required for automotive parts as well as have high polymer flowability to achieve the processability needed for thin-wall injection molding and provide a high surface quality finish, i.e. low gloss and no, or low level of, Tiger marks.

CN101343393B discloses an ethyl-propyl block copolymer polypropylene composition with excellent flowability, rigidness and impact strength. The composition comprises 100 parts by weight of polypropylene and 0.05-0.3 parts by weight of nucleating agent and has a melt index of 80-120 g/10 mins. The polypropylene is composed of 80-95 wt% of high crystallinity homopolypropylene and 5-10 wt% of ethyl-propyl block copolymer. US9416262B2 discloses heterophasic propylene copolymer comprising (a) a matrix comprising three polypropylene fractions, each having a different melt flow rate (MFR₂) and (b) an elastomeric propylene copolymer dispersed in said matrix. This heterophasic propylene copolymer is said to show high flowability and stiffness and good impact performance.

US2012/0157599 discloses an impact copolymer polypropylene composition comprising a propylene-based matrix and a propylene/ethylene or other propylene/alpha-olefin copolymer rubber phase. The composition has a low value of loss tangent and exhibits improved external appearance with less tiger (flow) marking as well as excellent mold flowability and stiffness-impact balance. EP1081189 A1 discloses an impact polymer for preparing a molded article which does not disclose 43-55 mol% ethylene in the PER and which does not disclose a composition having an MFR2 of 70-200 g/10 min. This leads to a lower gloss, a worse tiger mark ratio and a higher flexural modulus.

### SUMMARY OF INVENTION

Viewed from a first aspect the present invention provides an impact copolymer polypropylene composition comprising a propylene homopolymer or copolymer matrix and an ethylene propylene rubber phase dispersed in the matrix, wherein the ethylene propylene rubber phase (PER) is present in an amount of 5-15 wt%, based on the total weight of the propylene homopolymer or copolymer matrix and the ethylene propylene rubber phase, the amount of ethylene in the ethylene propylene rubber (PER-C2) phase is 43-55 mol%, and the intrinsic viscosity of the ethylene propylene rubber (PER-IV) phase is 3-7 dL/g and the impact copolymer polypropylene composition has a MFR2 of 70-200 g/10 min, as determined according to ASTMD1238-13 at 230 oC 2.16 kg.

Viewed from a further aspect the present invention provides a process for preparing an impact copolymer polypropylene composition as hereinbefore described comprising:
(i) polymerising propylene and optionally an olefin comonomer to obtain the propylene homopolymer or copolymer matrix; and
(ii) polymerising propylene and ethylene in the presence of the propylene homopolymer or copolymer matrix to obtain the ethylene propylene rubber phase dispersed in the propylene homopolymer or copolymer matrix.

Viewed from a further aspect the present invention provides an impact copolymer polypropylene composition obtainable by the processes herein described.

Viewed from a further aspect the present invention provides the use of the impact copolymer polypropylene composition herein described in injection molding, preferably thin-wall injection molding.

Viewed from a further aspect the present invention provides a method of injection molding, e.g. thin-wall injection molding, comprising injecting a molten impact copolymer polypropylene composition as herein described into a mold; solidifying the impact copolymer polypropylene in the mold and ejecting from the mold a molded impact copolymer polypropylene article.

Viewed from a further aspect the present invention provides a molded article (e.g. an automotive interior part) comprising the impact copolymer polypropylene composition herein described.

### DEFINTIONS

As used herein the term "hydrocarbyl" refers to a univalent radical derived from a hydrocarbon. Examples include alkyl groups. As used herein the term "aliphatic" is used to refer to non-cyclic groups. Aliphatic groups may be straight-chained (sometimes referred to as linear) or branched.

As used herein the term "impact copolymer polypropylene (ICP) composition" refers to a polymer comprising a propylene homopolymer or copolymer matrix and an ethylene propylene rubber phase (PER) dispersed in the matrix. Optionally the composition further comprises additives, e.g. antioxidants and/or stabilizers.

As used herein the term "propylene homopolymer" refers to a polymer which consists essentially of repeat units deriving from propylene. Propylene homopolymer may, for example, comprise at least 99 %, more preferably at least 99.5 %, still more preferably at least 99.95 %, and yet more preferably at least 99.95%, e.g. 100%, by weight of repeat units deriving from propylene.

As used herein the term "propylene copolymer" refers to a polymer comprising repeat units deriving from propylene and at least one other comonomer. Typically, propylene copolymer comprises at least 0.05%, more preferably at least 0.1 % and still more preferably at least 0.4 wt% of a repeat unit deriving from at least one other comonomer. Propylene copolymer will normally not comprise more than 15 wt% of repeat units deriving from at least one other comonomer.

As used herein the term PER-C2 refers to the mol% of repeat units deriving from ethylene (C2) in the ethylene propylene rubber phase, based on the total amount of repeat units present therein.

As used herein the term PER-IV refers to the intrinsic viscosity of the ethylene propylene rubber phase (PER) as determined by ISO 1628 (in decalin at 135°C).

As used herein the term "Ziegler Natta (ZN)" catalyst refers to a catalyst that comprises a transition metal halide (e.g. titanium halide, chromium halide, hafnium halide, zirconium halide or vanadium halide) supported on a metal or metalloid compound (e.g. a magnesium compound or a silica compound).

As used herein the term "catalyst system" refers to the catalyst and optional activators, electron donors and modifiers.

As used herein, the term "multistage process" refers to a process which is carried out in two or more stages.

Unless the context requires otherwise, throughout the specification and claims that follow, the word "comprise" and variations thereof, such as "comprises" and "comprising" are to be construed in an open, inclusive sense, that is, as "including, but not limited to".

### DETAILED DESCRIPTION

The present invention provides an impact copolymer polypropylene composition comprising a propylene homopolymer or copolymer matrix and an ethylene propylene rubber (PER) phase dispersed in the matrix, wherein the ethylene propylene rubber phase (PER) is present in an amount of 5-15 wt%, based on the total weight of the propylene homopolymer or copolymer matrix and the ethylene propylene rubber phase, the amount of ethylene in the ethylene propylene rubber (PER-C2) phase is 43-55 mol%, and the instrinsic viscosity of the ethylene propylene rubber (PER-IV) phase is 3-7 and the impact copolymer polypropylene composition has a MFR2 of 70-200 g/10 min, as determined according to ASTM D1238-13 at 230 °C 2.16 kg The impact copolymer polypropylene composition of the present invention possesses an ideal balance of properties for use in injection molding, especially thin-wall injection molding, and produces articles with superior surface appearance. Specifically the composition has a relatively high MFR₂ which facilitates injection into, and flow in, the mold, a relatively high flexural modulus that provides articles with the required mechanical properties as well as excellent surface appearance (e.g. low Tiger marks as measured by Tan(δ)) at a low gloss level. Articles comprising the impact copolymer polypropylene composition of the present invention therefore possess a desirable balance of stiffness-impact properties and have a high quality surface appearance (i.e. show no tiger marking even when injection molded in complex, large molds).

The impact copolymer polypropylene composition may comprise a propylene homopolymer matrix. Alternatively the impact copolymer polypropylene composition may comprise a propylene copolymer matrix. Alternatively the impact polypropylene composition may comprise a matrix which is a mixture of a propylene homopolymer and a propylene copolymer matrix.

When the impact copolymer propylene composition comprises a propylene copolymer matrix, the comonomer present is preferably one or more olefin (other than propylene) and more preferably one or more alpha-olefin. Particularly preferably the comonomer is selected from ethylene or C₄-C₈ alpha-olefin and mixtures thereof. Representative examples of preferred comonomers include ethylene, but-1-ene, pent-1-ene, hex-1-ene, hept-1-ene, oct-1-ene and mixtures thereof. Preferred comonomers include ethylene, but-1-ene, hex-1-ene and oct-1-ene. Ethylene is particularly preferred. Preferred propylene copolymers comprise 0.1-10.0 wt% and preferably 0.3-5.0 wt% and still more preferably 0.3-3.0 wt% comonomer. Preferably, however, the impact copolymer polypropylene composition comprises a propylene homopolymer matrix.

The propylene homopolymer or copolymer present in the matrix preferably has a tacticity of at least 94%. The tacticity affects the flexural modulus and strength of the impact copolymer polypropylene composition and the final properties of the thin-wall injection molded articles, e.g. automotive parts. Preferably the propylene homopolymer or copolymer present in the matrix has a tacticity of at least 95% and more preferably at least 96%. The tacticity of the propylene homopolymer or copolymer present in the matrix preferably has an upper limit of 98%.

The propylene homopolymer or copolymer present in the matrix preferably has a MFR₂ of 200-400 g/10 min, more preferably 250-350 g/10 min and still more preferably 250-300 g/10 min. This contributes to the overall processability of the composition.

Preferred impact copolymer polypropylene compositions of the present invention comprise 85-95 wt%, more preferably 85-94 wt%, yet more preferably 88-92 wt% and still more preferably 90-92 wt% of propylene homopolymer or copolymer matrix, based on the total weight of propylene homopolymer or copolymer matrix and ethylene propylene rubber phase.

The ethylene propylene rubber (PER) phase is present in the composition of the present invention in an amount of 5-15 wt%, more preferably 5-14 wt%, yet more preferably 6-12 wt% and still more preferably 8-10 wt%, based on the total weight of propylene homopolymer or copolymer matrix and ethylene propylene rubber phase.

The ethylene propylene rubber phase present in the composition of the present invention preferably consists essentially, e.g. consists of, repeat units derived from ethylene and propylene. If other repeat units are present (i.e. units from monomers other than ethylene or propylene), they are preferably present in an amount of less than 1 mol% and still more preferably less than 0.5 mol%. Preferably the ratio of ethylene to propylene in the ethylene propylene rubber phase is 1:0.75 to 1:1.22 and more preferably 1:0.82 to 1:1.

The amount of ethylene in the ethylene propylene rubber (PER) phase (i.e. PER-C2) is 43-55 mol%, more preferably 43-52 mol%, and still more preferably 45-50 mol%. Correspondingly, preferably the amount of propylene in the ethylene propylene rubber (PER) phase is 45-57 mol%, more preferably 48-57 mol% and still more preferably 50-55 mol%.

The intrinsic viscosity (IV) of the ethylene propylene rubber (PER) phase (i.e. PER-IV) is 3-7 dL/g, more preferably 3.5-6.5 dL/g and still more preferably 5-6 dL/g. This affects the flowability of polymer melt in the injection molding process and the surface appearance of the thin-wall injection molded articles.

The PER phase of the impact copolymer propylene composition is believed to significantly affect the mechanical properties as well as the surface appearance of articles comprising the composition. Without wishing to be bound by theory, it is thought that a higher PER content increases the domain size within the PER phase and this increases surface roughness thereby reducing the gloss level of articles made with the composition by scattering, rather than reflecting, a higher proportion of light. On the other hand, however, a higher PER content is also believed to increase the amount of separation between the matrix and dispersion phases thereby reducing certain mechanical properties, e.g. flexural modulus. The optimal PER content is thus one key factor that must be taken into account when seeking to optimise both the mechanical performance and the surface appearance of articles comprising impact copolymer propylene compositions.

The flow mark or "tiger mark" flow defect that appears on the finished surface of thin-wall injection molded articles is believed to result from the instability of the flow front during filling time that arises because of an imbalance in the viscosity ratio between the matrix and dispersion phases. To minimise flow mark defects, the intrinsic viscosity of the rubber phase (PER-IV) must be controlled. Without wishing to be bound by theory, it is believed that too low a PER-IV will be insufficient to prevent flow defects but that too high PER-IV will generate a gel and affect the final MFR₂ of the impact copolymer polypropylene composition. The PER content, PER-C2 and PER-IV of the impact copolymer polypropylene composition of the present invention surprisingly provides thin-wall injection molded articles, especially relatively large and long parts required in automotive applications, with the necessary mechanical strength (as refelected by the flexural modulus) as well as high surface quality, i.e. low gloss with fewer flow or Tiger marks.

Preferably the impact copolymer polypropylene composition has a high melt flow rate (MFR₂). This ensures it is suitable for thin wall injection molding applications, e.g. to prepare automotive parts. MFR₂ mainly depends on the molecular weight of the polymer. Longer chains of polymers tend to have lower MFR₂ compared to shorter chains.

The MFR₂ of the impact copolymer polypropylene composition 70-200 g/10 min and preferably 80-150 g/10 min.

The impact copolymer polypropylene composition of the present invention preferably has a flexural modulus of at least 1,500 MPa, and more preferably at least 1,600 MPa as determined according to ISO178. At this range, it is suitable for various applications and especially in the manufacture of automotive parts e.g. front and rear bumpers, interior dashboards and door trim, which requires a certain mechanical strength to ensure product performance and reliability. The upper limit of the flexural modulus is preferably 2,000 MPa.

The impact copolymer polypropylene composition of the present invention preferably has a Tan delta (tan-δ) of 2-25, more preferably 2-20 and still more preferably 2-10, as determined by Rheometer (model ARES-G2). At this range, it is suitable for the production of automotive parts as recited above, which are required to look attractive, i.e. be free of Tiger Marks or flow defects.

The impact copolymer polypropylene composition of the present invention preferably has a gloss at 60° of less than 90 %, according to ISO 2813, ISO 7668. Preferably the gloss at 60° is 80-90%, more preferably 80-89% and still more preferably 80-88%.

Preferred impact copolymer polypropylene compositions of the present invention comprise at least two, more preferably three, and still more preferably all of the following properties:
(i) MFR₂ of 80-150 g/10 min;
(ii) flexural modulus of at least 1,500 MPa;
(iii) Tiger mark ratio of less than 25; and
(iv) gloss at 60° of less than 90%.

The impact copolymer polypropylene composition may be prepared by any conventional methods known in the art. Preferably, however, the impact copolymer polypropylene composition is produced in a multistage process. Each stage may be carried out in the same reactor or in one ore more separate reactors. The process may be continuous, semi-continuous or batch but is preferably a continuous process.

The process for preparing the impact copolymer polypropylene composition of the present invention comprises (e.g. consists essentially of): (i) polymerising propylene and optionally an olefin comonomer to obtain the propylene homopolymer or copolymer matrix; and (ii) polymerising propylene and ethylene in the presence of the propylene homopolymer or copolymer matrix to obtain the ethylene propylene rubber phase dispersed in the propylene homopolymer or copolymer matrix.

In one preferred process, the propylene homopolymer or copolymer matrix and the ethylene propylene rubber phase is produced in the same reactor. In such a process, the polymerisation conditions are changed after the polymerisation of the propylene homopolymer or copolymer matrix is complete. Alternatively, and preferably, the propylene homopolymer or copolymer matrix may be produced in one or more reactors and then transferred to another reactor in which the ethylene propylene rubber phase is produced. Conventional reactors and polymerisation equipment may be used.

Optionally, the process may also comprise a pre-polymerisation step which precedes the first polymerisation step. Any pre-polymerisation step is carried out in a conventional manner.

The propylene homopolymer or copolymer matrix is preferably produced in a bulk polymerisation. Optionally the bulk polymerisation is carried out in several reactors, e.g. 1, 2 or 3 reactors. The conditions may be the same or different in each reactor. The ethylene propylene rubber phase is preferably produced in a gas phase polymerisation in the presence of the propylene homopolymer or copolymer. Again, the gas phase polymerisation may be carried out in one or more reactors, e.g. 1 or 2 reactors.

The polymerisation of the propylene homopolymer or copolymer matrix is preferably carried out at a temperature of 65-80°C and more preferably about 70 °C. Preferably the polymerisation is carried out at a pressure of 0.1-4.5 MPa, more preferably 2.9-4.2 MPa and still more preferably 3.3-4.2 MPa. Preferably the polymerisation time is 5-240 minutes, more preferably 10 to 90 minutes and still more preferably 15-40 minutes.

The polymerisation of the ethylene propylene rubber phase is preferably carried out at a temperature of 65-80 °C and more preferably about 70 °C. Preferably the polymerisation is carried out at a pressure of 0.1-202 MPa, more preferably 1-1.6 MPa and still more preferably 1-1.3 MPa. Preferably a pre-mixed gas comprising hydrogen, ethylene and propylene is continuously fed into the reactor. Preferably the mol% of ethylene to ethylene and propylene is 25-65 mol% and more preferably 35-55 mol%. Preferably the mol% of hydrogen to ethylene and propylene is 0-5 mol% and more preferably 1.5-3.5 mol%. Preferably the polymerisation time is 10-240 minutes, more preferably 20 to 120 minutes and still more preferably 30-50 minutes. Preferably the progress of the reaction is monitored using conventional means.

The reaction time for each stage of the polymerisation process is important as it partly determines the amount of matrix and ethylene propylene rubber phase present. Preferably the polymerisation time for the first stage is longer than the polymerisation time for the second stage. Preferably the progress of each of the polymerisation reactions is monitored using conventional means.

Preferably the impact copolymer polypropylene composition of the present invention is polymerised by a catalyst system comprising a Ziegler Natta catalyst. Thus preferably a Ziegler-Natta catalyst is used in both stages of the polymerisation. More preferably the same Ziegler-Natta catalyst is used in both stages.

Preferably the Ziegler-Natta catalyst comprises a titanium halide supported on a metal or metalloid compound, preferably MgCl₂. Preferably the solid catalyst comprises an amount of transition metal in the range of 0.1-5 mmol/g. Preferably the solid catalyst comprises an amount of Mg in the range of 1-25 wt% based on the weight of dry, solid catalyst.

Optionally the solid catalyst system further comprises one or more internal electron donors. Representative examples of suitable internal electron donors include amines, amides, ethers, esters, aromatic esters, ketones, nitriles, thioethers, thioesters, aldehydes, alcoholates, and salts of organic acids. A preferred internal electron donor comprises at least one organo-ester functional group and more preferably is a diester compound.

Preferably the catalyst system further comprises an activator as a cocatalyst. Activators may be selected from alkyl aluminium and alkoxy aluminium compounds. Preferred activators are alkyl aluminium compounds e.g. trimethyl aluminium and triethyl aluminium. The activator is preferably used in excess relative to the transition metal. For instance, when an alkyl aluminium is used as an activator, the molar ratio of the aluminium in the activator to the transition metal in the catalyst system is preferably from 1 to 500 mol/mol, and more preferably 2 to 100 mol/mol. The molar ratio of alkyl aluminum to titanium on the solid support (Al/Ti) is preferably in the range 10-400, and more preferably in the range 30-120.

The catalyst system comprising a Ziegler-Natta catalyst may additionally comprise co-activator and/or modifiers. Thus, for example, two or more alkyl aluminium compounds may be used and/or the catalyst system may be combined with the different types of internal donor e.g. ethers, ester etc. to modify the activity and/or selectivity of the catalyst system.

In preferred processes of the invention external donors are added to the polymerisation to modify the activity and/or selectivity of the polymerisation(s). Preferably an external donor is added to each stage of the polymerisation.

The external donors in the polymerisation of each of the propylene homopolymer or copolymer matrix and the ethylene propylene rubber phase may be the same or different. A preferred external donor in the polymerisation of the propylene homopolymer or copolymer matrix is an amino alkoxysilane compound. A preferred external donor in the polymerisation of the ethylene propylene rubber phase is a dialkoxy silane compound.

A preferred process for preparing an impact copolymer polypropylene composition of the present invention comprises:
(i) homopolymerising propylene using a Ziegler-Natta catalyst, alkyl aluminium as a co-catalyst, and an amino alkoxysilane compound of formula (I) as the first external electron donor

   [R¹R²N(R³)ₐ]ₓSi(OR⁴)₄₋ₓ (I)

   wherein x is 1 or 2, a is 0 or 1, R¹ and R² are independently C₁-C₅ aliphatic hydrocarbyl (e.g. C₁₋₅ alkyl) or C₃-C₆ cyclic hydrocarbyl (e.g. C₃₋₆ cycloalkyl), R³ is C₁-C₃ alkylene and R⁴ is C₁-C₂ aliphatic hydrocarbyl (e.g. C₁₋₂ alkyl);
(ii) copolymerising propylene and ethylene, in the presence of the polymer mixture obtained from step (i), using a Ziegler-Natta catalyst, alkyl aluminium as a co-catalyst, and a dialkoxy silane compound of formula (II) as a second external electron donor

   R⁵R⁶Si(OR⁷)₂ (II)

   wherein R⁵ and R⁶ are independently a C₁₋₆ aliphatic hydrocarbyl or a C₃-C₆ cyclic hydrocarbyl (e.g. a C₃₋₈ cycloalkyl group), optionally containing 1 or 2 heteroatoms, and R⁷ is C₁-C₄ aliphatic hydrocarbyl (e.g. C₁₋₄ alkyl group).

In preferred processes, a in formula (I) is 0.

In other preferred processes, x in formula (I) is 1.

In other preferred processes, R⁴ in formula (I) is methyl or ethyl.

In other preferred processes, R¹ and R² in formula (I) are independently C₁₋₆ aliphatic hydrocarbyl. More preferably R¹ and R² are independently C₁₋₃ alkyl, more preferably C₁₋₂ alkyl, e.g. methyl or ethyl. Preferably R¹ and R² are the same.

In other preferred processes R⁵ and R⁶ in formula (II) are a C₃₋₈ cycloalkyl group selected from cyclobutyl, cyclopentyl, and cyclohexyl. More preferably R⁵ and R⁶ are cyclopentyl or cyclohexyl. Preferably R⁵ and R⁶ are the same.

In other preferred processes R⁷ in formula (II) is C₁₋₃ alkyl, more preferably C₁₋₂ alkyl, e.g. methyl or ethyl.

In a particularly preferred process of the invention, the first election donor is diethylamino-triethoxysilane. In another preferred process of the invention the second electron donor is dicyclopentyldimethoxysilane. In a further preferred process of the invention, the first electron donor is diethylamino-triethoxysilane and the second electron donor is dicyclopentyldimethoxysilane.The impact copolymer polypropylene composition of the present invention optionally comprises modifiers and/or additives. These modifiers and/or additives may be included during the polymerisation process and/or after the polymerisation by melt mixing. Examples of suitable additives include, but are not limited to, stabilizers, lubricants, nucleating agents, pigments and foaming agents. Preferred compositions of the present invention comprise 0-1 wt% additives. Examples of suitable modifiers include fillers (e.g. talc, calcium carbonate) and thermoplastics. Preferred compositions of the invention comprise 0-10 wt% modifiers.

The impact copolymer polypropylene composition of the present invention is particularly well suited for use in compounding and/or injection molding. Preferred injection molding is thin-wall injection molding. Injection molding comprises injecting the molten impact copolymer polypropylene composition into a mold; solidifying the impact copolymer polypropylene in the mold and ejecting from the mold a molded impact copolymer polypropylene article. The article per se comprising the impact copolymer polypropylene composition forms a further aspect of the present invention. Preferred articles include packaging, industrial parts (e.g. automotive parts) and house hold injection molded parts. Particularly preferred parts are automotive parts e.g. front and rear bumpers, interior dashboards and door trim.

### Measurement method

The following describes the property testing of the impact copolymer polypropylene composition of the present invention.

Melt flow rate (MFR₂) was determined according to ASTM D1238-13 at 230°C 2.16 kg.

PER content (wt%), PER-C2 content (mol %), total C2 in ICP (mol %) and PE homopolymer (mol %) in ICP were measured by ¹³C-NMR spectroscopy using a Bruker Ascend 500 NMR spectrometer, with a ¹³C resonance frequency of 100.4 MHz. The mole percentage of comonomer was determined by the ratio of the integrals corresponding to the number of moles of comonomer to the integrals corresponding to the number of moles of all of the monomers in the copolymer. The sample was prepared in 1, 2, 4-trichlorobenzene with 1, 1, 2, 2-tetrachloroethane (*d₂*) and measured at 120°C. To determine the PER content and PER-C2 amount, the integral of each peak position was used together with first order of Markovian Statistics and Simplex Algorithm as described by H. N. Cheng. (J. Anal. Chem. 54, 1828 - 1833, 1982)

PER-IV (dL/g) was determined by ISO1628 (in decalin at 135°C).

Flexural modulus was determined by ISO 178.

Tiger Mark, Tan-delta (Tan-δ), was determined by using a 25 mm plate-plate geometry Rheometer (model ARES-G2). The frequency sweep mode in the linear viscoelastic region was selected for measurement at 190 °C. The frequency was set in the range of 0.1-200 rad/s. Nitrogen gas (N₂) was used during the experiments to prevent thermal degradation. Tan-δ was calculated from the ratio of Loss modulus (G) and Storage modulus (G) at a specific frequency of 0.1 rad/s.

Gloss was determined on an injection molded plaque having dimensions 50×50×2 mm³ using a Gloss meter at an angle of 60°according to ISO 2813, ISO 7668.

### EXAMPLES

All starting materials were commercially available.

### Preparation of the impact copolymer polypropylene composition

### Example 1

An impact copolymer of polypropylene and ethylene was produced using commercially available Ziegler-Natta catalyst with a magnesium chloride-based support.

The catalyst was dispersed in viscous hydrocarbon (e.g. hexane), pre-contacted with neat triethyl aluminum, and diluted with an external donor. The molar ratio of Ti on the catalyst/Al in triethyl aluminum/Si in the external donor was 1/80/30. The mixture was held inside a CSTR (Continuous Stirred-Tank Reactor) at 20 °C for 7 minutes. The mixture was then transferred to another CSTR filled with liquid propylene and pre-polymerised at 20 °C to obtain a degree of pre-polymerisation of 300 times by weight of catalyst. The pre-polymerisation catalyst was then injected into a 1^{st} loop reactor, along with additional liquid propylene and hydrogen at 70 °C/4.2 MPa, and polymerisation occurred. The average residence time inside the 1^{st} loop reactor was 42 minutes. The polymerisation mixture was transferred to a 2^{nd} loop reactor, along with additional liquid propylene and hydrogen, wherein polymerisation was carried out in the same conditions as in the 1^{st} loop reactor. The polymerisation catalyst from the 1^{st} loop reactor was used for continuous polymerisation in the 2^{nd} loop reactor. The residence time in the 2^{nd} loop reactor was 25 minutes. The resulting polymer was then transferred to a gas phase phase reactor where a continuous gas phase polymerisation was carried out. Optionally, a second electron donor at a molar ratio Si/Ti of 40, and/or alkyl aluminium, was added in between the 2^{nd} loop reactor and the gas phase reactor. Polymerisation occurred inside the gas phase polymerisation reactor for an average residence time of 30 minutes at 70 °C. The monomer gas composition of hydrogen/ethylene/propylene was controlled in the gas phase polymerisation at 0.05:43.5:56 polymerisation.

### Example 2

The same process as described above for example 1 was employed except that the monomer gas composition of hydrogen/ethylene/propylene was controlled in the gas phase polymerisation at 0.03:37.99:61.98.

### Example 3

The same process as described above for example 1 was employed except that the monomer gas composition of hydrogen/ethylene/propylene was controlled at 0.05:30.5:69 in the gas phase polymerisation.

### Comparative Example 4 and 5

Comparative impact copolymer polypropylene compositions were prepared. Comparative examples 4 and 5 have PER-IV which are lower than the examples (1-3) of the present invention.

### Preparation of Plaques for Gloss measurement

Plaques were prepared using an injection molding machine with a processing temperature of 190-210°C. The size of the injection molded plaque was set at 50×50×2 mm³.

### Results

The properties of the impact copolymer polypropylene prepared in the examples is summarised in the table below. Comparative examples 4 and 5 comprise a higher amount of PER-C2 than examples 1-3 of the present invention.

**Table 1 The properties of Example 1-3 and comparative example 4-5.**

| | | **Ex 1** | **Ex 2** | **Ex 3** | **Comp 4** | **Comp 5** |
|---|---|---|---|---|---|---|
| MFR2 | g/10 min | 73 | 102.3 | 103.4 | 130 | 96 |
| PER content | wt% | 7.01 | 6.79 | 5.33 | 12 | 7.61 |
| PER-C2 | mol % | 48.3 | 49.58 | 49.44 | 40 | 40.54 |
| PER-IV | dL/g | 6.02 | 5.1 | 5.76 | 2.45 | 2.76 |
| Flexural modulus | Mpa | 1,642 | 1,846 | 1,764 | 1,436 | 1,945 |
| Tiger mark ratio | Tan-δ | 2.83 | 3.01 | 4.74 | 42.7 | 37.4 |
| Gloss @60° (Thickness 1 mm) | | 88 | 85 | 85 | 92 | 90 |

The examples 1-3 of the present invention show a better balance of mechanical properties and aesthetic properties compared to the comparative examples 4 and 5. Specifically examples 1-3 have comparative mechanical properties (i.e. flexural modulus) to comparative examples 4 and 5 but have a significantly improved Tiger mark ratio (Tan-δ of 2.8-4.7 c.f. 37.4). The examples 1-3 also have lower gloss (85-88 c.f. 90) than comparative example 4 and 5.

## Claims

1. An impact copolymer polypropylene composition comprising a propylene homopolymer or copolymer matrix and an ethylene propylene rubber phase dispersed in the matrix, wherein the ethylene propylene rubber phase (PER) is present in an amount of 5-15 %wt, based on the total weight of the propylene homopolymer or copolymer matrix and the ethylene propylene rubber phase, the amount of ethylene in the ethylene propylene rubber (PER-C2) phase is 43-55 mol%, and the intrinsic viscosity of the ethylene propylene rubber (PER-IV) phase is 3-7 dL/g, and the impact copolymer polypropylene composition has a MFR₂ of 70-200 g/10 min, as determined according to ASTM D1238-13 at 230 °C 2.16 kg.

2. The impact copolymer polypropylene composition according to claim 1, wherein the amount of ethylene in the ethylene propylene rubber (PER-C2) phase is 45-50 mol%.

3. The impact copolymer polypropylene composition according to claim 1 or 2, wherein the ethylene propylene rubber phase (PER) is present in an amount of 5-14 wt%.

4. The impact copolymer polypropylene composition according to any preceding claim, wherein PER-IV is 3.5-6.5 dL/g

5. The impact copolymer polypropylene composition according to any preceding claim, wherein said composition has a MFR₂ of 80-150 g/10 min, as determined according to ASTM D1238-13 at 230 °C 2.16 kg.

6. The impact copolymer polypropylene composition according to any preceding claim, wherein said composition has a flexural modulus of at least 1,500 MPa, as determined according to ISO 178.

7. The impact copolymer polypropylene composition according to any preceding claim, wherein said composition has a tiger mark ratio (Tan-δ) of less than 25.

8. The impact copolymer polypropylene composition according to any preceding claim, wherein said composition has a gloss, when measured at 60°, of less than 90.

9. A process for preparing an impact copolymer polypropylene composition as claimed in any one of claims 1 to 8, comprising:
(i) polymerising propylene and optionally an olefin comonomer to obtain the propylene homopolymer or copolymer matrix; and
(ii) polymerising propylene and ethylene in the presence of the propylene homopolymer or copolymer matrix to obtain the ethylene propylene rubber phased dispersed in the propylene homopolymer or copolymer matrix.

10. A process for preparing an impact copolymer polypropylene composition as claimed in any one of claims 1 to 8, wherein the process comprises:
(i) homopolymerising propylene using a Ziegler-Natta catalyst, alkyl aluminium as a co-catalyst, and an amino alkoxysilane compound of formula (I) as a first external electron donor
[R¹R²N(R³)ₐ]ₓSi(OR⁴)₄₋ₓ (I)
wherein x is 1 or 2, a is 0 or 1, R¹ and R² are independently C₁-C₅ aliphatic hydrocarbyl or C₃-C₆ cyclic hydrocarbyl, R³ is C₁-C₃ alkylene and R⁴ is C₁-C₂ aliphatic hydrocarbyl;
(ii) copolymerising propylene and ethylene, in the presence of the polymer mixture obtained from step (i), using a Ziegler-Natta catalyst, alkyl aluminium as a co-catalyst, and a dialkoxy silane compound of formula (II) as a second external electron donor
R⁵R⁶Si(OR⁷)₂ (II)
wherein R⁵ and R⁶ are independently a C₁₋₆ aliphatic hydrocarbyl or C₃-C₆ cyclic hydrocarbyl, optionally containing 1 or 2 heteroatoms; and R⁷ is C₁-C₄ aliphatic hydrocarbyl.

11. The process according to claim 10 wherein the first election donor is diethylamino-triethoxy-silane and the second electron donor is dicyclopentyldimethoxysilane.

12. Use of the impact copolymer polypropylene composition according to any one of claims 1 to 8 in compounding or injection molding.

13. Use according to claim 12 wherein said injection molding is thin-wall injection molding.

14. A method of injection molding comprising injecting a molten impact copolymer polypropylene composition as claimed in any one of claims 1 to 8 into a mold; solidifying the impact copolymer polypropylene in the mold and ejecting from the mold a molded impact copolymer polypropylene article.

15. A molded article comprising the impact copolymer polypropylene composition according to any one of claims 1 to 8 .

16. A molded article as claimed in claim 15 which is an automotive part, packaging, industrial part, house hold injection part, preferably complex and large and/or long molded part and more preferably an automotive part.

## Patentansprüche

1. Schlagfeste Polypropylencopolymerzusammensetzung umfassend eine Propylenhomopolymer- oder -copolymermatrix und eine Ethylen-Propylen-Kautschukphase, die in der Matrix dispergiert ist, wobei die Ethylen-Propylen-Kautschukphase (PER) in einer Menge von 5-15 Gew.-%, auf das Gesamtgewicht der Propylenhomopolymer- oder -copolymermatrix und der Ethylen-Propylen-Kautschukphase bezogen, vorliegt, wobei die Menge von Ethylen in der Ethylen-Propylen-Kautschuk-(PER-C2-)Phase 43-55 Mol-% beträgt und die intrinsische Viskosität der Ethylen-Propylen-Kautschuk-(PER-IV-)Phase 3-7 dl/g beträgt und die schlagfeste Polypropylencopolymerzusammensetzung eine MFR₂ von 70-200 g/10 min, wie ASTM D1238-13 entsprechend bei 230 °C, 2,16 kg bestimmt, aufweist.

2. Schlagfeste Polypropylencopolymerzusammensetzung nach Anspruch 1, wobei die Menge an Ethylen in der Ethylen-Propylen-Kautschuk-(PER-C2-)Phase 45-50 Mol-% beträgt.

3. Schlagfeste Polypropylencopolymerzusammensetzung nach Anspruch 1 oder 2, wobei die Ethylen-Propylen-Kautschukphase (PER) in einer Menge von 5-14 Gew.-% vorliegt.

4. Schlagfeste Polypropylencopolymerzusammensetzung nach einem vorhergehenden Anspruch, wobei PER-IV 3,5-6,5 dl/g beträgt.

5. Schlagfeste Polypropylencopolymerzusammensetzung nach einem vorhergehenden Anspruch, wobei die Zusammensetzung eine MFR₂ von 80-150 g/10 min, wie ASTM D1238-13 entsprechend bei 230 °C, 2,16 kg bestimmt, aufweist.

6. Schlagfeste Polypropylencopolymerzusammensetzung nach einem vorhergehenden Anspruch, wobei die Zusammensetzung einen Biegemodul von mindestens 1 500 MPa, wie ISO 178 entsprechend bestimmt, aufweist.

7. Schlagfeste Polypropylencopolymerzusammensetzung nach einem vorhergehenden Anspruch, wobei die Zusammensetzung ein Tigermarkierungsverhältnis (Tan-δ) von weniger als 25 aufweist.

8. Schlagfeste Polypropylencopolymerzusammensetzung nach einem vorhergehenden Anspruch, wobei die Zusammensetzung einen Glanz, wenn bei 60° gemessen, von weniger als 90 aufweist.

9. Verfahren zum Herstellen einer schlagfesten Polypropylencopolymerzusammensetzung nach einem der Ansprüche 1 bis 8, umfassend:
(i) Polymerisieren von Propylen und wahlweise einem Olefincomonomer, um die Propylenhomopolymer- oder -copolymermatrix zu erhalten; und
(ii) Polymerisieren von Propylen und Ethylen in Gegenwart der Propylenhomopolymer- oder -copolymermatrix, um den Ethylen-Propylen-Kautschuk zu erhalten, der in der Propylenhomopolymer- oder -copolymermatrix phasendispergiert ist.

10. Verfahren zum Herstellen einer schlagfesten Polypropylencopolymerzusammensetzung nach einem der Ansprüche 1 bis 8, wobei das Verfahren Folgendes umfasst:
(i) Homopolymerisieren von Propylen unter Anwendung eines Ziegler-Natta-Katalysators, von Alkylaluminium als Cokatalysator und einer Aminoalkoxysilanverbindung der Formel (I) als ersten externen Elektronendonor
[R¹R²N(R³)ₐ]ₓSi(OR⁴)₄₋ₓ (I)
wobei x 1 oder 2 beträgt, a 0 oder 1 beträgt, R¹ und R² unabhängig aliphatisches Ci-Cs-Hydrocarbyl oder cyclisches C₃-C₆-Hydrocarbyl sind, R³ C₁-C₃-Alkylen ist und R⁴ aliphatisches C₁-C₂-Hydrocarbyl ist.
(ii) Copolymerisieren von Propylen und Ethylen in Gegenwart der aus Schritt (i) erhaltenen Polymermischung unter Anwendung eines Ziegler-Natta-Katalysators, von Alkylaluminium als Cokatalysator und einer Dialkoxysilanverbindung der Formel (II) als zweiten externen Elektronendonor
R⁵R⁶Si(OR⁷)₂ (II)
wobei R⁵ und R⁶ unabhängig ein aliphatisches C₁-C₆-Hydrocarbyl oder cyclisches C₃-C₆-Hydrocarbyl sind, die wahlweise 1 oder 2 Heteroatome enthalten; und R⁷ aliphatisches C₁-C₄-Hydrocarbyl ist.

11. Verfahren nach Anspruch 10, wobei der erste Elektronendonor Diethylaminotrieethoxysilan ist und der zweite Elektronendonor Dicyclopentyldimethoxysilan ist.

12. Verwendung der schlagfesten Polypropylencopolymerzusammensetzung nach einem der Ansprüche 1 bis 8 beim Compoundieren oder Spritzgießen.

13. Verwendung nach Anspruch 12, wobei das Spritzgießen Dünnwandspritzgießen ist.

14. Verfahren zum Spritzgießen umfassend Einspritzen einer geschmolzenen schlagfesten Polypropylencopolymerzusammensetzung nach einem der Ansprüche 1 bis 8 in eine Form; Verfestigen des schlagfesten Polypropylencopolymers in der Form und Ausstoßen, aus der Form, eines geformten schlagfeste Polypropylencopolymerartikels.

15. Geformter Artikel, der die schlagfeste Polypropylencopolymerzusammensetzung nach einem der Ansprüche 1 bis 8 umfasst.

16. Geformter Artikel nach Anspruch 15, der ein Fahrzeugteil, eine Verpackung, ein industrieller Teil, ein Haushaltspritzteil, bevorzugt ein komplexer und großer und/oder langer geformter Teil und noch bevorzugter ein Fahrzeugteil ist.

## Revendications

1. Composition de polypropylène copolymère résistant aux chocs comprenant une matrice d'homopolymère ou de copolymère de propylène et une phase de caoutchouc d'éthylène-propylène dispersée dans la matrice, dans laquelle la phase de caoutchouc d'éthylène-propylène (PER) est présente en une quantité de 5 à 15 % en pds, sur la base du poids total de la matrice d'homopolymère ou de copolymère de propylène et de la phase de caoutchouc d'éthylène-propylène, la quantité d'éthylène dans la phase de caoutchouc d'éthylène-propylène (PER-C2) est de 43-55 % en mole, et la viscosité intrinsèque de la phase de caoutchouc d'éthylène-propylène (PER-IV) est de 3-7 dl/g, et la composition de polypropylène copolymère résistant aux chocs présente un MFR₂ de 70-200 g/10 min, tel que déterminé selon la norme ASTM D1238-13 à 230 °C 2,16 kg.

2. Composition de polypropylène copolymère résistant aux chocs selon la revendication 1, dans laquelle la quantité d'éthylène dans la phase de caoutchouc d'éthylène-propylène (PER-C2) est de 45-50 % en mole.

3. Composition de polypropylène copolymère résistant aux chocs selon la revendication 1 ou 2, dans laquelle la phase de caoutchouc d'éthylène-propylène (PER) est présente en une quantité de 5-14 % en pds.

4. Composition de polypropylène copolymère résistant aux chocs selon l'une quelconque des revendications précédentes, dans laquelle le PER-IV est de 3,5-6,5 dl/g.

5. Composition de polypropylène copolymère résistant aux chocs selon l'une quelconque des revendications précédentes, dans laquelle ladite composition présente un MFR₂ de 80-150 g/10 min, tel que déterminé selon la norme ASTM D1238-13 à 230 °C 2,16 kg.

6. Composition de polypropylène copolymère résistant aux chocs selon l'une quelconque des revendications précédentes, dans laquelle ladite composition présente un module d'élasticité en flexion d'au moins 1 500 MPa, tel que déterminé selon la norme ISO 178.

7. Composition de polypropylène copolymère résistant aux chocs selon l'une quelconque des revendications précédentes, dans laquelle ladite composition présente un rapport de zébrures (Tan-δ) inférieur à 25.

8. Composition de polypropylène copolymère résistant aux chocs selon l'une quelconque des revendications précédentes, dans laquelle ladite composition présente une brillance, lorsque mesurée à 60 °, de moins de 90.

9. Procédé de préparation d'une composition de polypropylène copolymère résistant aux chocs selon l'une quelconque des revendications 1 à 8, consistant à :
(i) polymériser du propylène et facultativement un comonomère d'oléfine pour obtenir la matrice d'homopolymère ou de copolymère de propylène ; et
(ii) polymériser du propylène et de l'éthylène en présence de la matrice d'homopolymère ou de copolymère de propylène pour obtenir la phase de caoutchouc d'éthylène-propylène dispersée dans une phase dans la matrice d'homopolymère ou de copolymère de propylène.

10. Procédé de préparation d'une composition de polypropylène copolymère résistant aux chocs selon l'une quelconque des revendications 1 à 8, dans lequel le procédé comprend les étapes consistant à :
(i) homopolymériser du propylène en utilisant un catalyseur de Ziegler-Natta, de l'alkyl aluminium comme co-catalyseur, et un composé amino alcoxysilane de formule (I) comme premier donneur d'électrons externe
[R¹R²N(R³)ₐ]ₓSi(OR⁴)₄₋ₓ (I)
dans lequel x a la valeur de 1 ou 2, a a la valeur de 0 ou 1, R¹ et R² sont indépendamment un groupe hydrocarbyle aliphatique en C₁ à C₅ ou hydrocarbyle cyclique en C₃ à C₆, R³ est un groupe alcylène en C₁ à C₃ et R⁴ est un groupe hydrocarbyle aliphatique en C₁ à C₂ ;
(ii) copolymériser du propylène et de l'éthylène, en présence du mélange de polymères obtenu à partir de l'étape (i), en utilisant un catalyseur de Ziegler-Natta, de l'alkyl aluminium comme co-catalyseur, et un composé dialcoxy silane de formule (II) comme second donneur d'électrons externe
R⁵R⁶Si (OR⁷)₂ (II)
dans lequel R⁵ et R⁶ sont indépendamment un groupe hydrocarbyle aliphatique en C₁ à C₆ ou hydrocarbyle cyclique en C₃ à C₆, contenant facultativement 1 ou 2 hétéroatomes; et R⁷ est un groupe hydrocarbyle aliphatique en C₁ à C₄.

11. Procédé selon la revendication 10, dans lequel le premier donneur d'électrons est du diéthylamino-triéthoxy-silane et le deuxième donneur d'électrons est du dicyclopentyldiméthoxysilane.

12. Utilisation de la composition de polypropylène copolymère résistant aux chocs selon l'une quelconque des revendications 1 à 8 en mélangeage ou moulage par injection.

13. Utilisation selon la revendication 12, dans laquelle ledit moulage par injection est un moulage par injection à paroi fine.

14. Procédé de moulage par injection comprenant l'injection d'une composition de polypropylène copolymère résistant aux chocs selon l'une quelconque des revendications 1 à 8 dans un moule ; la solidification du polypropylène copolymère résistant aux chocs dans le moule et l'éjection hors du moule d'un article de polypropylène copolymère résistant aux chocs moulé.

15. Article moulé comprenant la composition de polypropylène copolymère résistant aux chocs selon l'une quelconque des revendications 1 à 8.

16. Article moulé selon la revendication 15 qui est une pièce automobile, un emballage, une pièce industrielle, une pièce d'injection à usage domestique, préférablement une pièce moulée complexe et grande et/ou longue et plus préférablement une pièce automobile.
